# EUROPÄISCHE PATENTSCHRIFT

(11) **EP 0 898 068 B1**
(45) Veröffentlichungstag und Bekanntmachung des Hinweises auf die Patenterteilung: **25.02.2004**
(21) Anmeldenummer: 98112649.3
(22) Anmeldetag: 08.07.1998
(51) Int. Cl.: F02D 41/26, F02D 41/34

(54) **Verfahren und Vorrichtung zur Steuerung der Kraftstoff-Einspritzmenge für eine Brennkraftmaschine in einem Fahrzeug**
Method and apparatus for controlling the fuel injection for the combustion engine of a vehicle
Méthode et dispositif pour contrôler l'injection de carburant d'un moteur à combustion d'un véhicule

(30) Priorität: 18.08.1997 DE 19735721
(43) Veröffentlichungstag der Anmeldung: 24.02.1999
(73) Patentinhaber: Bayerische Motoren Werke Aktiengesellschaft, 80788 München (DE)
(72) Erfinder: Siegl, Norbert, 83661 Lenggries (DE)

(56) Entgegenhaltungen:
- EP-A- 0 645 532
- DE-A- 4 113 958
- US-A- 4 791 569

## Beschreibung

Die Erfindung betrifft ein Verfahren und eine Vorrichtung zur Steuerung der Kraftstoff-Einspritzmenge für eine Brennkraftmaschine in einem Fahrzeug nach den Oberbegriffen der Patentansprüche 1 und 3.

Ein derartiges Verfahren und eine derartige Vorrichtung sind beispielsweise durch die aktuellen Vierzylinder-Brennkraftmaschinen in BMW Fahrzeugen bekannt. Diese BMW Fahrzeuge weisen ein elektronisches Brennkraftmaschinen-Steuergerät mit einer Motorola-Prozessoranordnung (z. B. 68333 oder 68336) auf, die zwei unterschiedliche, miteinander kommunizierende Prozessoren (CPU, TPU (time processing unit)) enthält. Die CPU als erster Prozessor dieser Prozessoranordnung führt insbesondere rechenzeitintensive Funktionen aus, wogegen die TPU als zweiter Prozessor dieser Prozessoranordnung echtzeitkritische, insbesondere kurbelwellensynchrone, Steuerfunktionen ausführt. Beide Prozessoren können mit anwendungsspezifischen Software-Programmen ausgestattet werden. Die Verwendung einer TPU und einer CPU zur Steuerung der Kraftstoff-Einspritzmenge ist beispielsweise auch aus der EP 0 645 532 A2 bekannt.

Zur Steuerung der Kraftstoff-Einspritzmenge, die vorzugsweise zylinderselektiv bzw. sequentiell vorgenommen wird, übermittelt die CPU eine vorgegebene Kraftstoff-Einspritzzeit und einen vorgegebenen Einspritzendewinkel der Kurbelwelle jeweils für einen bestimmten Zylinder an die TPU. Von der TPU wird der Ist-Winkel der Kurbelwelle erfaßt. Die TPU ermittelt in Abhängigkeit vom Ist-Winkel der Kurbelwelle, von der vorgegebenen Kraftstoff-Einspritzzeit und vom vorgegebenen Einspritzendewinkel den hierfür erforderlichen Einspritzstartwinkel der Kurbelwelle bzw. den erforderlichen Einspritzstartzeitpunkt. Ist der ermittelte Einspritzstartzeitpunkt erreicht bzw. entspricht der Ist-Winkel dem ermittelten erforderlichen Einspritzstartwinkel, führt die TPU die Einspritzung durch Ansteuerung des einem bestimmten Zylinder zugeordneten Einspritzventils für die vorgegebene Kraftstoff-Einspritzzeit ohne weitere Berücksichtigung des Ist-Winkels der Kurbelwelle zeitgesteuert durch.

Bei diesem bekannten Verfahren entspricht der tatsächliche Einspritzendewinkel nach Ausgabe der vorgegebenen Kraftstoff-Einspritzzeit meist mit sehr hoher Genauigkeit dem vorgegebenen Einspritzendewinkel, wenn die Kurbelwellenwinkelgeschwindigkeit bzw. die Drehzahl der Brennkraftmaschine während der Einspritzung konstant bleibt. Wenn jedoch insbesondere bei Startvorgängen starke Drehzahlschwankungen auftreten, weicht der tatsächliche Einspritzendewinkel häufig erheblich von dem vorgegebenen Einspritzendewinkel ab. Bei dem bekannten Verfahren wird, wenn sich die Drehzahl während der Einspritzung kurzzeitig erhöht, die Abweichung des tatsächlichen Einspritzendewinkels von dem vorgegebenen Einspritzendewinkel ignoriert, da in diesem Fall der vorgegebene Einspritzendewinkel vor dem tatsächlichen Einspritzendewinkel liegt. Tritt jedoch während der Einspritzung für die vorgegebene Kraftstoff-Einspritzzeit eine Verlangsamung der Drehzahl auf, liegt der tatsächliche Einspritzendewinkel vor dem vorgegebenen Einspritzendewinkel. In diesem Fall wird bei dem bekannten Verfahren die Einspritzung erneut für die bereits vorher vorgegebene Kraftstoff-Einspritzzeit gestartet, wenn nach einer vorgegebenen Wartezeit der vorgegebene Einspritzendewinkel noch nicht erreicht ist. Dieses Vorgehen führt bei Drehzahlschwankungen häufig zu unnötigen Doppeleinspritzungen.

Es ist daher Aufgabe der Erfindung, ein Verfahren eingangs genannter Art derart zu verbessern, daß unnötige Doppeleinspritzungen und somit unnötiger Kraftstoffverbrauch vermieden werden.

Diese Aufgabe wird durch die kennzeichnenden Merkmale der Patentansprüche 1 und 3 gelöst.

Erfindungswesentlich ist die Vorgabe eines zusätzlichen Kurzimpulses als zusätzliche Kraftstoff-Einspritzzeit unter Beibehaltung des zuvor vorgegebenen Einspritzendewinkels, wenn der tatsächliche Einspritzendewinkel am Ende der Einspritzung für die zuvor vorgegebene Kraftstoff-Einspritzzeit vor dem vorgegebenen Einspritzendewinkel liegt. Bei der Vorgabe des Kurzimpulses wird wie üblich derart vorgegangen, daß in Abhängigkeit vom Ist-Winkel der Kurbelwelle, von der vorgegebenen Kraftstoff-Einspritzzeit, hier in Form des Kurzimpulses, und von dem vorgegebenen Einspritzendewinkel der erforderliche Einspritzstartwinkel der Kurbelwelle bzw. der erforderliche Einspritzstartzeitpunkt erneut ermittelt wird. Dabei wird die Länge des Kurzimpulses derart bestimmt, daß während der Zeit des Kurzimpulses keine Drehzahländerung auftreten bzw. erfaßt werden kann. Somit ist sichergestellt, daß am Ende der Kraftstoff-Einspritzzeit in Form des Kurzimpulses der tatsächliche Einspritzendewinkel zwangsweise gleich dem vorgegebenen Einspritzendewinkel ist.

Gemäß einer vorteilhaften Weiterbildung der Erfindung werden die Einspritzventile zumindest für die Dauer des Kurzimpulses ausgeschaltet, so daß eine Kraftstoff-Einspritzzeit in Form des Kurzimpulses lediglich virtuell im Steuergerät vorgegeben wird, ohne tatsächlich eine überflüssige Kraftstoff-Einspritzung auszulösen.

Somit wird durch das erfindungsgemäße Verfahren und mittels der erfindungsgemäßen Vorrichtung unter Zugrundelegung des bekannten Verfahrens und der bekannten Vorrichtung eine zuverlässsige Drehzahlsynchronisation vorgenommen, ohne dabei einen überflüssigen Kraftstoffverbrauch zu bewirken.

In der Zeichnung ist ein Ausführungsbeispiel der Erfindung dargestellt. Es zeigen
- Fig. 1: die wesentlichen Komponenten der erfindungsgemäßen Vorrichtung und
- Fig. 2: die zeitliche Abfolge der vorgegebenen realen Kraftstoff-Einspritzzeit und der darauf folgenden Kraftstoff-Einspritzzeit in Form des Kurzimpulses, wenn am Ende der realen Kraftstoff-Einspritzzeit der tatsächliche Einspritzendewinkel vor dem vorgegebenen Einspritzendewinkel liegt.

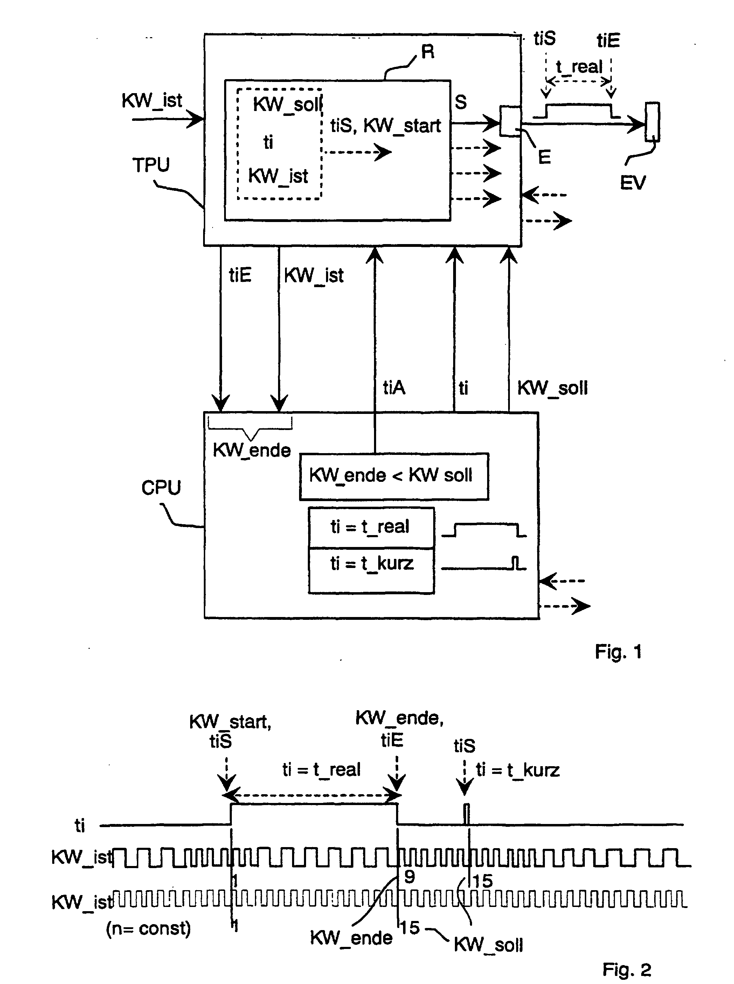

In Fig. 1 sind die im hier nicht vollständig dargestellten Steuergerät enthaltenen miteinander kommunizierenden Prozessoren, der erste Prozessor CPU und der zweite Prozessor TPU, dargestellt. Der erste Prozessor CPU ermittelt aufgrund hier nicht näher beschriebener Eingangssignale in bekannter Weise die für jeden Zylinder einer Brennkraftmaschine vorzugebende reale Kraffstoff-Einspritzzeit ti = t_real sowie einen vorzugebenden Einspritzendewinkel KW_soll der Kurbelwelle und übermittelt diese beiden Daten an den zweiten Prozessor TPU. Der zweite Prozessor TPU erfaßt in bekannter Weise den Ist-Winkel KW_ist der Kurbelwelle, vorzugsweise mittels eines induktiven Drehzahlsensors, der ein auf der Kurbelwelle angebrachtes ferromagnetisches Geberrad mit einer Vielzahl von Zähnen und einer größeren Zahnlücke abtastet.

Ergänzend wird zur Funktionsweise des Drehzahlsensors auf das Fachbuch "Autoelektrik, Autoelektronik am Otto-Motor", Bosch, VDI-Verlag, 1994, Seite 224 und 225, verwiesen. Auch zur üblichen Berechnung einer vorzugebenden Kraftstoff-Einspritzzeit, insbesondere bei sequentieller Einspritzung, wird als Beispiel auf dasselbe Fachbuch, Seite 231 und Seite 232, hingewiesen.

Der zweite Prozessor TPU ermittelt in einer Recheneinheit R in Abhängigkeit vom Ist-Winkel KW_ist der Kurbelwelle, von der vorgegebenen Kraftstoff-Einspritzzeit ti = t_real und vom vorgegebenen Einspritzendewinkel KW_soll den für diese Vorgaben erforderlichen Einspritzstartwinkel KW_start der Kurbelwelle bzw. den erforderlichen Einspritzstartzeitpunkt tiS. Die Recheneinheit R gibt bei Erreichen des Einspritzstartwinkels KW_ist = KW_start zum Einspritzstartzeitpunkt tiS die Einspritzung für einen bestimmten Zylinder durch Ansteuerung des den bestimmten Zylinder zugeordneten Einspritzventils EV für die vorgegebene Kraftstoff-Einspritzzeit ti = t_real zeitgesteuert durch. Hierzu gibt die Recheneinheit R ein Steuersignal S an die Endstufe E zur Ansteuerung des Einspritzventils EV aus. Während der vorgegebenen Kraftstoff-Einspritzzeit ti = t_real wird von der Recheneinheit R der Ist-Winkel KW_ist der Kurbelwelle ignoriert. Es findet demnach lediglich eine Zeitsteuerung keine Regelung in Abhängigkeit vom Kurbelwellenwinkel statt.

Nach Ablauf der vorgegebenen Kraftstoff-Einspritzzeit ti = t_real, d. h. zum Einspritzendezeitpunkt tiE, wird dieser Einspritzendezeitpunkt tiE sowie der zu diesem Zeitpunkt vorliegende Ist-Winkel KW_ist der Kurbelwelle an den ersten Prozessor CPU übermittelt. Der Ist-Winkel KW_ist der Kurbelwelle zum Einspritzendezeitpunkt tiE entspricht dem tatsächlichen Einspritzendewinkel KW_ende. Der erste Prozessor CPU vergleicht den tatsächlichen Einspritzendewinkel KW_ende mit dem vorgegebenen Einspritzendewinkel KW_soll. Liegt der tatsächliche Einspritzendewinkel KW_ende (9; vgl. Fig. 2) vor dem vorgegebenen Einspritzendewinkel KW_soll (15; vgl. Fig. 2), gibt der erste Prozessor CPU an den zweiten Prozessor TPU ein Steuersignal tiA zum Ausschalten des Einspritzventils EV aus. Somit steuert die Recheneinheit R des zweiten Prozessors TPU über das Steuersignal S die Endstufe E derart an, daß kein Kraftstoff über das Einspritzventil EV ausgegeben werden kann. Gleichzeitig wird vom ersten Prozessor CPU an den zweiten Prozessor TPU unter Beibehaltung des zuvor vorgegebenen Einspritzendewinkels KW_soll (15) ein Kurzimpuls ti = t_kurz als neue Kraftstoff-Einspritzzeit ti vorgegeben. Die Recheneinheit R ermittelt wie üblich in Abhängigkeit vom Ist-Winkel KW_ist, von der neuen vorgegebenen Kraftstoff-Einspritzzeit ti = t_kurz und vom vorgegebenen Einspritzendewinkel KW_soll den erforderlichen Einspritzstartwinkel KW_start der Kurbelwelle. Prozessor-intern wird daraufhin innerhalb der Recheneinheit R eine virtuelle Einspritzung für die Kraftstoff-Einspritzzeit t_kurz in Form des Kurzimpulses vorgegeben, die sich jedoch durch das Ausschalten des Einspritzventils EV nicht real auswirkt. Am Ende der Kraftstoff-Einspritzzeit in Form des Kurzimpulses t_kurz wird erneut vom zweiten Prozessor TPU der Einspritzendezeitpunkt tiE und der zu diesem Zeitpunkt vorliegende Ist-Winkel KW_ist der Kurbelwelle an den ersten Prozessor CPU übermittelt. Da der Kurzimpuls in seiner Länge derart bemessen wird (vgl. Fig. 2), daß sich innerhalb der Kraftstoff-Einspritzzeit in Form des Kurzimpulses keine Drehzahländerung bzw. keine Änderung der Kurbelwellenwinkelgeschwindigkeit ergeben kann, wird im ersten Prozessor CPU festgestellt, daß nunmehr der tatsächliche Einspritzendewinkel KW_ende gleich dem bereits zuvor vorgegebenen Einspritzendewinkel KW_soll (15) ist. Somit wurde bei einer Drehzahlschwankung eine erfolgreiche Synchronisation durchgeführt.

In Fig. 2 ist der zeitliche Verlauf der vorgegebenen realen Kraftstoff-Einspritzzeit ti = t_real und der zusätzlichen virtuellen Kraftstoff-Einspritzzeit ti = t_kurz für den Fall einer Drehzahlverlangsamung während der vorgegebenen realen Kraftstoff-Einspritzzeit t = t_real dargestellt. Weiterhin sind in Fig. 2 auch zwei die Drehzahl wiedergebende Sensorsignale zur Erfassung des Ist-Winkels KW_ist dargestellt, unten für eine konstante Drehzahl n und in der Mitte für den Fall einer Drehzahlschwankung. Die Impulse der Sensorsignale entsprechen den Zähnen des mit der Kurbelwelle verbundenen Geberrades. Grundsätzlich wird der Ist-Winkel KW_ist der Kurbelwelle durch die Nummer des Zahnes nach der Zahnlücke (hier nicht dargestellt) bestimmt. Zur Vereinfachung der Darstellung der Erfindung wird in Fig. 2 der ermittelte erforderliche Einspritzstartwinkel KW_start mit 1 bezeichnet. Dieser erforderliche Einspritzstartwinkel KW_start wurde vom zweiten Prozessor TPU in Abhängigkeit von dem vorgegebenen Einspritzendewinkel KW_soll = 15 und in Abhängigkeit von der vorgegebenen Kraftstoff-Einspritzzeit ti = t_real ermittelt. Bei dieser Ermittlung geht der zweite Prozessor TPU von der Beibehaltung der Drehzahl aus, die kurz vor dem Einspritzstartzeitpunkt tiS vorliegt, wie in Fig. 2 durch das untere Drehzahlsensorsignal dargestellt ist. Ändert sich jedoch, wie in Fig. 2 durch das obere Drehzahlsensorsignal dargestellt ist, die Drehzahl während der Kraftstoff-Einspritzzeit ti = t_real in Form einer Verlangsamung der Drehzahl, liegt der tatsächliche Einspritzendewinkel KW_ende zum Einspritzendezeitpunkt tiE bei 9. Somit liegt der tatsächliche Einspritzendewinkel KW_ende vor dem zuvor vorgegebenen Einspritzendewinkel KW_soll = 15. In diesem Fall gibt der zweite Prozessor TPU prozessorintern in Abhängigkeit von dem zuvor bereits vorgegebenen Einspritzendewinkel KW_soll und der zusätzlichen Kraftstoff-Einspritzzeit ti in Form des Kurzimpulses t_kurz zu einem neuen Einspritzstartzeit tiS diesen Kurzimpuls derart aus, daß anschließend der neue tatsächliche Einspritzendewinkel KW_ende gleich dem vorgegebenen Einspritzendewinkel KW_soll entspricht. Die Länge des Kurzimpulses ist vorzugsweise kleiner als die Impulsbreite des Drehzahlsensorsignals. Somit kann sich während der Kraftstoff-Einspritzzeit in Form des Kurzimpulses t_kurz die Drehzahl nicht ändem, womit sichergestellt ist, daß der neue tatsächliche Einspritzendewinkel KW_ende gleich dem vorgegebenen Einspritzendewinkel KW_soll = 15 ist.

Durch diese erfindungsgemäße Vorrichtung und dieses erfindungsgemäße Verfahren wird eine Drehzahlsynchronisation erreicht und werden die systembedingten Doppeleinspritzungen, wie eingangs beschrieben, wirksam vermieden.

## Patentansprüche

1. Verfahren zur Steuerung der Kraftstoff-Einspritzmenge für eine Brennkraftmaschine in einem Fahrzeug mittels eines elektronischen Steuergeräts, bei dem der Ist-Winkel (KW_ist) der Kurbelwelle erfaßt wird, bei dem in Abhängigkeit vom Ist-Winkel (KW_ist), von einer vorgegebenen Kraftstoff-Einspritzzeit (ti; t_real) und von einem vorgegebenen Einspritzendewinkel (KW_soll) der erforderliche Einspritzstartwinkel (KW_start) der Kurbelwelle bzw. der erforderliche Einspritzstartzeitpunkt (tiS) für einen bestimmten Zylinder ermittelt wird, bei dem die Einspritzung durch Ansteuerung des dem bestimmten Zylinder zugeordneten Einspritzventils (EV) für die vorgegebene Kraftstoff-Einspritzzeit (ti) zeitgesteuert bis zu einem tatsächlichen Einspritzendewinkel (KW_ende) durchgeführt wird, **dadurch gekennzeichnet, daß** im Steuergerät unter Beibehaltung des vorgegebenen Einspritzendewinkels (KW_soll; 15) ein Kurzimpuls (t_kurz) als zusätzliche Kraftstoff-Einspritzzeit (ti) für den bestimmten Zylinder vorgegeben wird, wenn der tatsächliche Einspritzendewinkel (KW_ende; 9) vor dem vorgegebenen Einspritzendewinkel (KW_soll; 15) liegt.

2. Verfahren nach Patentanspruch 1, **dadurch gekennzeichnet, daß** das dem bestimmten Zylinder zugeordnete Einspritzventil (EV) ausgeschaltet wird, wenn der Kurzimpuls (t_kurz) als zusätzliche Kraftstoff-Einspritzzeit (ti) für den bestimmten Zylinder vorgegeben wird.

3. Vorrichtung zur Durchführung des Verfahrens nach Patentanspruch 1 zur Steuerung der Kraftstoff-Einspritzmenge für eine Brennkraftmaschine in einem Fahrzeug mit einem elektronischen Steuergerät, das zwei miteinander kommunizierende Prozessoren (TPU, CPU) aufweist, wobei für einen bestimmten Zylinder
• vom ersten Prozessor (CPU) eine vorgegebene Kraftstoff-Einspritzzeit (ti; t_real) und ein vorgegebener Einspritzendewinkel (KW_soll) der Kurbelwelle an den zweiten Prozessor (TPU) übermittelt werden,
• vom zweiten Prozessor (TPU) der Ist-Winkel (KW_ist) der Kurbelwelle erfaßt wird
• vom zweiten Prozessor (TPU) in Abhängigkeit vom Ist-Winkel (KW_ist), von der vorgegebenen Kraftstoff-Einspritzzeit (ti) und vom vorgegebenen Einspritzendewinkel (KW_soll) der erforderliche Einspritzstartwinkel (KW_start) der Kurbelwelle bzw. der erforderliche Einspritzstartzeitpunkt (tiS) ermittelt wird und bei Erreichen des Einspritzstartwinkels (KW_ist = KW_start) die Einspritzung durch Ansteuerung des dem bestimmten Zylinder zugeordneten Einspritzventils (EV) für die vorgegebene Kraftstoff-Einspritzzeit (ti) zeitgesteuert durchgeführt wird, **dadurch gekennzeichnet, daß**
• vom zweiten Prozessor (TPU) der tatsächliche Einspritzendewinkel (KW_ende; 9) bzw. der Einspritzendezeitpunkt (tiE) und der Ist-Winkel (KW_ist) an den ersten Prozessor (CPU) übermittelt werden,
• vom ersten Prozessor (CPU) der vorgegebene Einspritzendewinkel (KW_soll; 15) und der tatsächliche Einspritzendewinkel (KW_ende; 9) miteinander verglichen werden und
• wenn der vorgegebene Einspritzendewinkel (KW_soll; 15) nach dem tatsächlichen Einspritzendewinkel (KW_ende; 9) liegt, vom ersten Prozessor (CPU) an den zweiten Prozessor (TPU) unter Beibehaltung des zuvor vorgegebenen Einspritzendewinkels (KW_soll; 15) ein Kurzimpuls (t_kurz) als zusätzliche Kraftstoff-Einspritzzeit (ti) vorgegeben wird.

4. Vorrichtung nach Patentanspruch 3 zur Durchführung des Verfahrens nach Patentanspruch 2, **dadurch gekennzeichnet, daß** der erste Prozessor (CPU) an den zweiten Prozessor (TPU) ein Steuersignal (tiA) zum Ausschalten des dem bestimmten Zylinder zugeordneten Einspritzventils (EV) übermittelt, wenn der Kurzimpuls (ti=t_kurz) als zusätzliche Kraftstoff-Einspritzzeit (ti) vorgegeben wird.

## Claims

1. A method for controlling the fuel injection quantity for an internal-combustion engine in a vehicle by means of an electronic control apparatus, in which the actual angle (KW_actual) of the crankshaft is detected, in which the required injection starting angle (KW_start) of the crankshaft or the required injection starting point in time (tiS) for a specific cylinder is determined as a function of the actual angle (KW_actual), a defined fuel injection time (ti; t_real) and a defined injection end angle (KW_desired), in which the injection is carried out by triggering the injection valve (EV) associated with the specific cylinder for the defined fuel injection time (ti), in a time controlled manner, up to an actual injection end angle (KW_end), **characterised in that** a short pulse (t_short) is defined as the additional fuel injection time (ti) for the specific cylinder in the control apparatus while retaining the defined injection end angle (KW_desired; 15), if the actual injection end angle (KW_end; 9) is before the defined injection end angle (KW_desired; 15).

2. A method according to claim 1, **characterised in that** the injection valve (EV) associated with the specific cylinder is switched off when the short pulse (t_short) is defined as additional fuel injection time (ti) for the specific cylinder.

3. A device for carrying out the method according to claim 1 for controlling the fuel injection quantity for an internal-combustion engine in a vehicle with an electronic control apparatus having at least two processors (TPU, CPU) communicating with one another, wherein for a specific cylinder
• a defined fuel injection time (ti; t_real) and a defined injection end angle (KW_desired) of the crankshaft are transmitted by the first processor (CPU) to the second processor (TPU),
• the actual angle (KW_actual) of the crankshaft is detected by the second processor (TPU),
• the required injection starting angle (KW_start) of the crankshaft or the required injection starting point in time (tiS) is determined by the second processor (TPU) as a function of the actual angle (KW_actua)). the defined fuel injection time (ti) and the defined injection end angle (KW_desired) and, on reaching the injection starting angle (KW_actual = KW_start), the injection is carried out in a time-controlled manner by triggering the injection valve (EV) associated with the specific cylinder for the defined fuel injection time (ti), **characterised in that**
• the actual injection end angle (KW_end; 9) or the injection end point in time (tiE) and the actual angle (KW_actuat) are transmitted by the second processor (TPU) to the first processor (CPU),
• the defined injection end angle (KW_desired; 15) and the actual injection end angle (KW_end; 9) are compared with one another by the first processor (CPU) and
• when the defined injection end angle (KW_desired; 15) is after the actual injection end angle (KW_end; 9), a short pulse (t_short) is defined as the additional fuel injection time (ti) by the first processor (CPU) to the second processor (TPU) while retaining the previously defined injection end angle (KW_desired; 15).

4. A device according to claim 3, for carrying out the method according to claim 2, **characterised in that** the first processor (CPU) transmits a control signal (tiA) to the second processor (TPU) for switching off the injection valve (EV) associated with the specific cylinder, when the short pulse (ti = t_short) is defined as the additional fuel injection time (ti).

## Revendications

1. Procédé pour contrôler l'injection de carburant d'un moteur à combustion interne d'un véhicule au moyen d'un dispositif de contrôle électronique dans lequel l'angle réel (KW_réel) du vilebrequin est détecté, selon lequel, en fonction de l'angle réel (KW_réel), d'une durée d'injection de carburant (ti ; t_réel) prescrite et d'un angle de fin d'injection (KW_consigne) prescrit, l'angle de début d'injection (KW_début) nécessaire du vilebrequin, ou le moment de début d'injection (tiS) nécessaire pour un cylindre défini est déterminé, l'injection étant réalisée par l'activation de la soupape d'injection (EV) associée au cylindre défini pendant la durée d'injection de carburant (ti) prescrite, commandée dans le temps jusqu'à un angle de fin d'injection (KW_fin) effectif,
**caractérisé en ce que**
dans le dispositif de contrôle, en conservant l'angle de fin d'injection (KW_consigne ; 15) prescrit, une impulsion courte (t_court) est prescrite pour le cylindre défini en supplément à la durée d'injection de carburant (ti) lorsque l'angle de fin d'injection (KW_fin ; 9) effectif se présente avant l'angle de fin d'injection (KW_consigne ; 15) prescrit.

2. Procédé selon la revendication 1,
**caractérisé en ce que**
la soupape d'injection (EV) associée au cylindre défini est mise hors service lorsque l'impulsion courte (t_court) est prescrite en tant que durée d'injection de carburant (ti) supplémentaire pour le cylindre défini.

3. Dispositif pour exécuter le procédé selon la revendication 1 pour le contrôle du débit d'injection de carburant pour un moteur à combustion interne d'un véhicule au moyen d'un dispositif de contrôle électronique qui présente deux processeurs (TPU, CPU) communiquant entre eux, dans lequel, pour un cylindre défini,
- le premier processeur (CPU) transmet au deuxième processeur une durée d'injection de carburant (ti ; t_réel) prescrite et un angle de fin d'injection (KW_consigne) prescrit du vilebrequin ;
- l'angle réel (KW_réel) du vilebrequin est détecté par le deuxième processeur (TPU) ;
- le deuxième processeur (TPU) détermine en fonction de l'angle réel (KW_réel), de la durée d'injection de carburant (ti) prescrite et de l'angle de fin d'injection (KW_consigne) prescrit, l'angle de début d'injection (KW_début) nécessaire du vilebrequin, ou le moment de début d'injection (tiS) nécessaire et, lorsqu'on atteint l'angle de début d'injection (KW_réel = KW_début), l'injection est réalisée par l'activation de la soupape d'injection (EV) associée au cylindre défini, pendant la durée d'injection de carburant (ti) prescrite, commandée dans le temps,
**caractérisé en ce que**
- le deuxième processeur (TPU) transmet au premier processeur (CPU) l'angle de fin d'injection (KW_fin ; 9) effectif, ou le moment de fin d'injection (tiE) et l'angle réel (KW_réel),
- l'angle de fin d'injection (KW_consigne ; 15) prescrit et l'angle de fin d'injection (KW_fin ; 9) effectif sont comparés par le premier processeur (CPU) et,
- lorsque l'angle de fin d'injection (KW_consigne ; 15) prescrit se présente après l'angle de fin d'injection (KW_fin ; 9) effectif, une impulsion courte (t_court) est prescrite par le premier processeur (CPU) au deuxième processeur (TPU) en tant que durée d'injection de carburant (ti) supplémentaire, en conservant l'angle de fin d'injection (KW_consigne ; 15) précédemment prescrit.

4. Dispositif selon la revendication 3, pour exécuter le procédé selon la revendication 2,
**caractérisé en ce que**
le premier processeur (CPU) transmet au deuxième processeur (TPU) un signal de commande (tiA) pour mettre hors service la soupape d'injection (EV) associée au cylindre défini lorsque l'impulsion courte (ti = t_court) est prescrite en tant que durée d'injection de carburant (ti) supplémentaire.
